Europäisches Patentamt

European Patent Office

Office européen des brevets

(19)

(11) Numéro de publication : **0 520 946 A1**

## (12) DEMANDE DE BREVET EUROPEEN

(21) Numéro de dépôt : **92810472.8**

(22) Date de dépôt : **19.06.92**

(51) Int. Cl.$^5$ : **G02B 6/44**

(30) Priorité : **24.06.91 FR 9107920**

(43) Date de publication de la demande :
**30.12.92 Bulletin 92/53**

(84) Etats contractants désignés :
**AT BE CH DE DK ES FR GB IT LI PT**

(71) Demandeur : **CABLES CORTAILLOD S.A.**
**CH-2016 Cortaillod (CH)**

(72) Inventeur : **Urfer, Patrick**
**Les Tailles 24**
**CH-2016 Cortaillod (CH)**

(74) Mandataire : **Nithardt, Roland**
**CABINET ROLAND NITHARDT Y-PARC Ch. de
la Sallaz C.P. 3347**
**CH-1400 YVERDON-LES-BAINS (CH)**

(54) **Dispositif d'extrémité pour câble optique.**

(57) Le dispositif d'extrémité pour câble optique (10) comporte un manchon (11) qui définit une cavité (12) à l'intérieur de laquelle est logé un organe répartiteur (13) composé de trois tronçons (26, 27, 28). Le manchon (11) comporte un prolongement tubulaire (14) dans lequel est engagé un tube (15), et une bague de sertissage (16). Le tube (15) comporte une butée annulaire (19) et une tête d'ancrage (20) disposées dans le prolongement d'un tronçon cylindrique (21) qui porte l'armature (17). La tête (20) est prévue pour assurer la liaison du tube (15) et du manchon (11). Les éléments de traction, constitués par l'armature (17) sont engagés sur le tronçon cylindrique (21), amenés en butée contre la butée annulaire (19), et maintenus par la bague (16).

Fig. 1

EP 0 520 946 A1

La présente invention concerne un dispositif d'extrémité pour câble optique comprenant plusieurs fibres optiques et une armature comportant des éléments de traction de ce câble, comportant des moyens pour fixer ladite armature, un organe répartiteur pour séparer les fibres et les positionner autour d'une surface cylindrique, des éléments tubulaires de protection des fibres individuelles dans lesquels sont engagés les tronçons d'extrémités de chacune des fibres du câble, des connecteurs solidaires de ces éléments tubulaires de protection pour assurer le raccordement desdites fibres, et un organe tubulaire souple définissant une cavité dans laquelle sont logés lesdits éléments tubulaires de protection et lesdits connecteurs pendant la pose du câble.

Pour l'installation de lignes de communication par câble optique à fibres multiples, on utilise habituellement des dispositifs d'extrémité comportant un répartiteur et des connecteurs. Pour mettre en place ces dispositifs, on soude des fibres à gaine renforcée équipées de connecteurs aux extrémités des fibres du câble dans un module d'épissure, cette opération étant exécutée sur le site par du personnel spécialisé.

Ce travail présente l'inconvénient d'être délicat et coûteux, parce qu'il nécessite l'intervention d'un monteur équipé d'un matériel sophistiqué et requiert une mesure optique de contrôle de la liaison, cette mesure étant généralement effectuée par un ingénieur.

On connaît déjà des méthodes pour effectuer la pose de câbles optiques, et notamment la mise en place par traction d'un câble prééquipé de connecteurs d'extrémités des fibres optiques de ce câble. Une telle méthode est par exemple décrite par l'article "Fibres-optic installation methods differ from usuel techniques" dans EDN ELECTRICAL DESIGN NEWS vol 22, N° 15 Août 1977. Newton Massachusetts US. Cet article décrit la méthode de pose mais non le dispositif d'extrémité auquel est lié le bas de tirage du câble.

La demande de brevet européen publiée sous le N° 0392679 décrit un dispositif répartiteur de fibres dans lequel la cavité d'éclatement des fibres est remplie de résine polymérisable pour solidariser les éléments de traction du câble. Une telle opération est délicate et doit obligatoirement être faite sous vide pour empêcher la présence d'une poche d'air. Par ailleurs, selon la viscosité de la résine, il existe un risque que cette résine pénètre dans les tubes de protection de chaque fibre.

En outre, le répartiteur décrit étant de symétrie circulaire, rien n'empêche une rotation des pièces lors de l'assemblage, ce qui peut avoir pour conséquence un sectionnement des fibres optiques.

La présente invention se propose de pallier ces inconvénients en réalisant un dispositif d'extrémité permettant la pose d'un câble optique aux extrémités duquel les connecteurs des fibres optiques individuelles ont été montés en usine, c'est-à-dire supprimant toute intervention de spécialistes sur le site, évitant l'utilisation de résine pour solidariser les éléments de traction du câble et empêchant la rotation relative des pièces du dispositif pendant le montage.

Ce but est atteint par le dispositif d'extrémité selon l'invention, caractérisé en ce que les moyens pour fixer ladite armature comportent un tube et au moins une bague de sertissage agencée pour s'adapter par-dessus l'armature préalablement engagée sur ledit tube.

Ledit tube est de préférence monté à une extrémité d'un manchon à l'intérieur duquel est disposé ledit organe répartiteur.

Selon une forme de réalisation préférentielle, l'organe répartiteur comporte un premier tronçon sensiblement conique dont la base est solidaire d'un deuxième tronçon cylindrique lui-même relié à un troisième tronçon au moins partiellement cylindrique ayant un diamètre inférieur à celui du deuxième tronçon.

De préférence, le manchon et l'organe répartiteur comportent des moyens de positionnement angulaire agencés pour empêcher une rotation relative de ces deux éléments pendant l'assemblage.

Dans ce cas, les moyens de positionnement angulaire comportent avantageusement au moins une vis disposée dans un alésage fileté approprié du manchon et engagée dans un évidement du deuxième tronçon cylindrique.

Le deuxième tronçon comporte de préférence plusieurs canaux et/ou gorges périphériques disposés régulièrement selon une direction axiale et destinés à loger chacune des fibres du câble optique.

Selon un mode de réalisation particulièrement avantageux, le troisième tronçon est agencé pour servir d'appui auxdits éléments tubulaires de protection des tronçons d'extrémités des fibres optiques. Il permet de fixer par collage les éléments de traction des gaines individuelles tubulaires.

Selon une forme de réalisation particulièrement avantageuse, le tube comporte un tronçon cylindrique, une butée annulaire et une tête d'ancrage disposés dans cet ordre d'amont en aval.

Le tronçon cylindrique est de préférence agencé pour recevoir ladite armature et ladite bague de sertissage et la butée annulaire est agencée pour servir d'arrêt à ladite armature.

Dans cette forme de réalisation avantageuse, la tête d'ancrage est agencée pour assurer le couplage mécanique du tube et du manchon.

La présente invention sera mieux comprise en référence à la description d'un exemple de réalisation et du dessin annexé dans lequel :

la figure 1 représente une vue en coupe axiale du dispositif d'extrémité selon l'invention,

la figure 2 représente une vue en coupe transversale selon la ligne A-A de la figure 1,

la figure 3 représente une coupe transversale du dispositif de l'invention selon la ligne B-B de la figure 1,

la figure 4 représente une vue en coupe transversale du dispositif de l'invention selon la ligne C-C de la figure 1, et

la figure 5 représente une vue schématique illustrant l'utilisation du dispositif selon l'invention pendant la pose du câble optique.

En référence aux figures, le dispositif d'extrémité 10 représenté comporte essentiellement un manchon 11 qui définit une cavité 12 à l'intérieur de laquelle est logé, au moins partiellement, un organe répartiteur 13 qui sera décrit ci-après. Le manchon comporte un prolongement tubulaire amont 14 dans lequel est engagé un tube 15 qui coopère avec une bague de sertissage 16 pour constituer des moyens pour fixer l'armature 17 du câble optique 18. Le tube 15 comporte une butée annulaire 19 et une tête d'ancrage 20 disposées successivement dans le prolongement d'un tronçon cylindrique 21. La tête d'ancrage 20 est prévue pour assurer la liaison du tube 15 et du manchon 11, par exemple par vissage ou tout autre moyen de couplage mécanique. Le tronçon cylindrique 21 porte l'armature 17. La partie intérieure du câble, c'est-à-dire les fibres et le gainage de protection, est disposée à l'intérieur du tube 15. Les éléments de traction, constitués par l'armature 17 faite par exemple de fibres de verre imprégnées de colle ou de résine, sont engagés sur le tronçon cylindrique 21 du tube 15, amenés en butée contre la butée annulaire 19, et maintenus, de préférence, par la bague de sertissage 16. L'armature 17 peut également comporter des brins de liaison que l'opérateur répartit autour de la périphérie du tronçon cylindrique 21, en butée contre la butée annulaire 19.

Le répartiteur 13 logé à l'intérieur du manchon 11 se compose d'un premier tronçon sensiblement conique 26 dont la base est solidaire d'un deuxième tronçon cylindrique 27 qui est couplé à un troisième tronçon au moins partiellement cylindrique 28 ayant un diamètre inférieur à celui du tronçon cylindrique précédent.

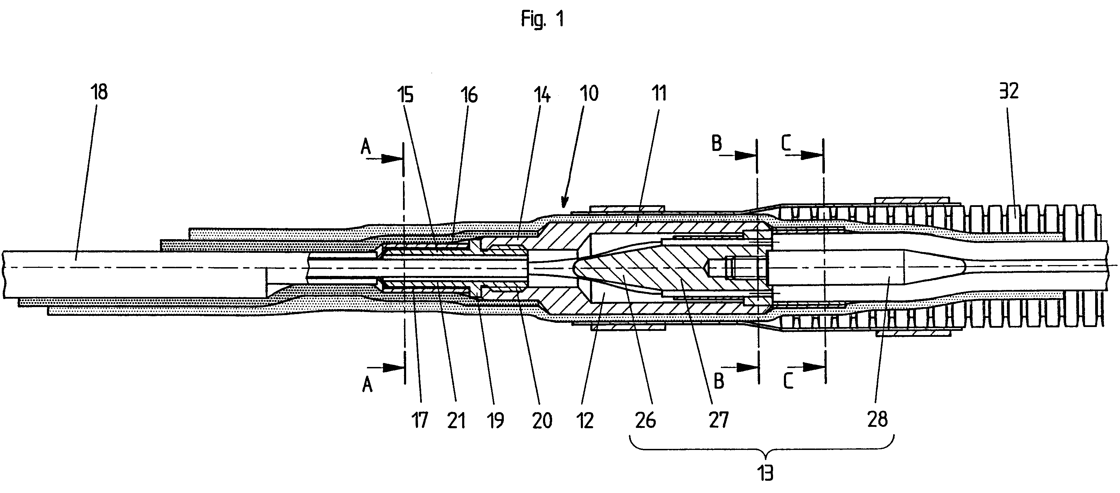

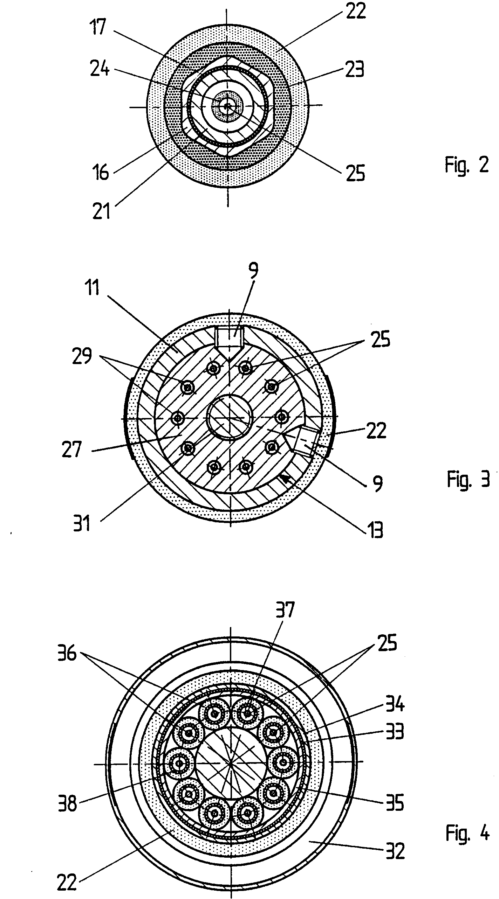

La figure 2 illustre plus particulièrement une vue en coupe selon la ligne A-A de la figure 1. La couche extérieure est constituée d'un tube thermorétractable 22 comportant une couche adhésive intérieure. La couche suivante 23 est également constituée d'un matériau thermorétractable adhésif recouvrant une certaine longueur de câble, la bague de sertissage 16 et le prolongement tubulaire amont 14 du manchon 11. La bague de sertissage 16 est initialement constituée par un élément cylindrique de section circulaire qui est déformé de telle façon que sa surface extérieure devienne polygonale. Cette déformation est obtenue au moyen d'une pince.

L'armature 17 constitue la couche suivante qui est prise entre la bague de sertissage 16 décrite ci-dessus et le tronçon cylindrique 21 du tube 15. A l'intérieur du tube 15 se trouve un tube de protection 24 en matière synthétique contenant les fibres individuelles 25 du câble optique.

La fig. 3 représente une vue en coupe selon la ligne B-B du dispositif au niveau du répartiteur. Ce répartiteur 13 est monté à l'intérieur du manchon 11 lui-même recouvert par une couche extérieure constituée par le tube thermorétractable 22. Il est pourvu d'une série de canaux et/ou gorges périphériques 29 disposés selon un cercle concentrique au tronçon cylindrique 27 et dans lesquels passent les fibres optiques individuelles 25. Au centre une partie filetée 31 assure la liaison entre le deuxième tronçon cylindrique 27 et le troisième tronçon cylindrique 28. Dans le cas présent, ces deux tronçons sont séparés, mais ils pourraient bien entendu être réalisés d'une pièce. On notera que le manchon 11 est pourvu d'au moins un et de préférence de deux alésages filetés dans lesquels sont engagés deux vis 9, à extrémité conique, qui sont logées dans deux évidements coniques ménagés à la périphérie du tronçon cylindrique 27. Ces vis constituent des moyens de positionnement angulaire des deux éléments constitués respectivement par le manchon 11 et ledit tronçon cylindrique 27 et empêchent la rotation de ces deux pièces l'une relativement à l'autre.

Comme le montre la coupe selon la ligne C-C de la figure 4, à son extrémité aval, le dispositif est prolongé par un flexible 32 qui recouvre le tube thermorétractable 22, et une couche de brins de traction 33, par exemple en Kevlar [R], est prise entre deux couches 34, 35 de ruban adhésif armé de fibres de verre. Dans la pratique, les brins sont disposés dans le sens amont-aval dans la couche inférieure 35 et retournés dans la couche extérieure 34. A l'intérieur de ces couches, sont disposés des gaines thermoplastiques 36 contenant les fibres optiques 25 logées à l'intérieur d'éléments tubulaires 37, par exemple en nylon [R]. Des brins de traction 38, également en Kevlar [R], sont disposés à l'intérieur de la gaine thermoplastique.

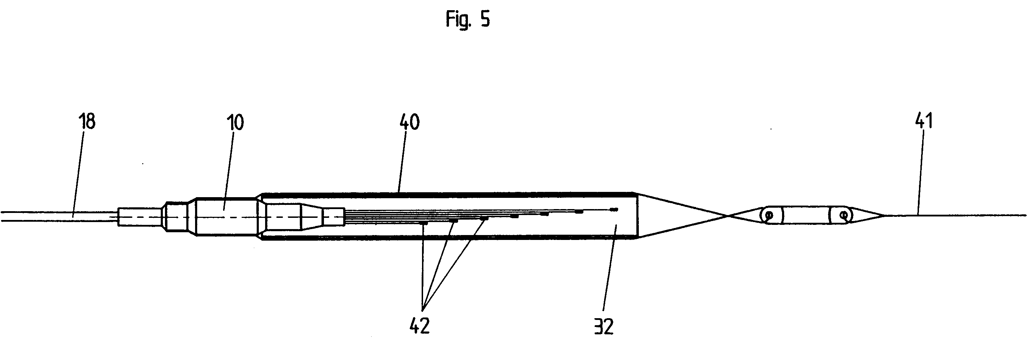

La figure 5 illustre la mise en place d'un câble optique équipé du dispositif décrit ci-dessus. Ce dispositif 10 est monté à l'extrémité du câble optique 18 et se trouve à l'intérieur d'une poche 40 que l'on appelle un bas de tirage de câble. Cet organe est fixé à un câble de traction 41 pour être tiré à travers une gaine posée préalablement.

Les fibres individuelles sont équipées de connecteurs 42 fixés à leur extrémité. On notera que ces connecteurs sont axialement échelonnés, ce qui permet de les loger dans le flexible 32 dont le diamètre est approximativement égal à celui du dispositif.

La présente invention n'est pas limitée à l'exemple de réalisation décrit ci-dessus, mais elle s'étend à toute modification ou variante évidente pour un homme du métier.

**Revendications**

1. Dispositif d'extrémité pour câble optique comprenant plusieurs fibres optiques et une armature comportant des éléments de traction de ce câble, comportant des moyens pour fixer ladite armature, un organe répartiteur pour séparer les fibres et les positionner autour d'une surface cylindrique, des éléments tubulaires de protection des fibres individuelles dans lesquels sont engagés les tronçons d'extrémités de chacune des fibres du câble, des connecteurs solidaires de ces éléments tubulaires de protection pour assurer le raccordement desdites fibres, et un organe tubulaire souple définissant une cavité dans laquelle sont logés lesdits éléments tubulaires de protection et lesdits connecteurs pendant la pose du câble, caractérisé en ce que les moyens pour fixer ladite armature (17) comportent un tube (15) et au moins une bague de sertissage (16) agencée pour s'adapter par-dessus l'armature préalablement engagée sur ledit tube.

2. Dispositif selon la revendication 1, caractérisé en ce que ledit tube ( 15 ) est monté à une extrémité d'un manchon (11) à l'intérieur duquel est disposé ledit organe répartiteur (13).

3. Dispositif selon la revendication 1, caractérisé en ce que l'organe répartiteur ( 13) comporte un premier tronçon sensiblement conique ( 26 ) dont la base est solidaire d'un deuxième tronçon cylindrique (27) lui-même relié à un troisième tronçon au moins partiellement cylindrique (28) ayant un diamètre inférieur à celui du deuxième tronçon , les trois tronçons étant coaxiaux et disposés dans l'ordre chronologique.

4. Dispositif selon la revendication 3, caractérisé en ce que ledit manchon (11) et ledit organe répartiteur (13) comportent des moyens de positionnement angulaire agencés pour empêcher une rotation relative de ces deux éléments pendant l'assemblage.

5. Dispositif selon la revendication 4, caractérisé en ce que les moyens de positionnement angulaire comportent au moins une vis (9) disposée dans un alésage fileté approprié du manchon (11) et engagée dans un évidement du deuxième tronçon cylindrique.

6. Dispositif selon la revendication 3, caractérisé en ce que le deuxième tronçon (27) comporte plusieurs canaux et/ou gorges périphériques (29) régulièrement espacés et disposés selon une direction axiale, destinés à loger chacune des fibres du câble optique (18).

7. Dispositif selon la revendication 3, caractérisée en ce que le troisième tronçon (28) est agencé pour servir d'appui auxdits éléments tubulaires de protection (37) des tronçons d'extrémités des fibres optiques (25).

8. Dispositif selon la revendication 1, caractérisé en ce que le tube (15) comporte un tronçon cylindrique (21), une butée annulaire (19) et une tête d'ancrage (20) disposés dans cet ordre d'amont en aval.

9. Dispositif selon la revendication 8, caractérisé en ce que le tronçon cylindrique (21) est agencé pour recevoir ladite armature (17) et ladite bague de sertissage (16).

10. Dispositif selon la revendication 8, caractérisé en ce que la butée annulaire (19 ) est agencée pour servir d'arrêt à ladite armature (17).

11. Dispositif selon la revendication 8, caractérisé en ce que la tête d'ancrage (20) est agencée pour assurer le couplage mécanique du tube (15) et du manchon (11).

Fig. 1

Fig. 2

Fig. 3

Fig. 4

Fig. 5

EP 0 520 946 A1

EP 0 520 946 A1

**Office européen des brevets**

# RAPPORT DE RECHERCHE EUROPEENNE

Numero de la demande

EP 92 81 0472

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EDN ELECTRICAL DESIGN NEWS. vol. 22, no. 15, Août 1977, NEWTON, MASSACHUSETTS US pages 73 - 77 P. FILE 'Fiber-optic installation methods differ from usual techniques' * tout le document * | 1 | G02B6/44 |
| A | EP-A-0 392 679 (SUMITOMO) * abrégé * * colonne 3, ligne 23 - colonne 4, ligne 34 * * figure 3 * | 1 | |
| A | US-A-4 846 564 (CARON ET AL.) * abrégé * * colonne 2, ligne 65 - colonne 3, ligne 16 * * figures 4,5 * | 1 | |
| A | IBM TECHNICAL DISCLOSURE BULLETIN. vol. 32, no. 11, Avril 1990, NEW YORK US pages 389 - 390 'STRAIN RELIEF FOR OPTICAL FIBERS AT ENTRANCE OR EXIT FROM A DUCT' * tout le document * | 1 | **DOMAINES TECHNIQUES RECHERCHES (Int. Cl.5 )** G02B |

Le présent rapport a été établi pour toutes les revendications

| Lieu de la recherche | Date d'achèvement de la recherche | Examinateur |
|---|---|---|
| LA HAYE | 05 OCTOBRE 1992 | LUCK W.S. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

8